# FASCICULE DE BREVET EUROPEEN

(11) **EP 0 297 014 B1**
(45) Date de publication et mention de la délivrance du brevet: **11.08.1993**
(21) Numéro de dépôt: 88450024.0
(22) Date de dépôt: 16.06.1988
(51) Int. Cl.: G07F 7/08, G09F 3/00, G07D 7/00

(54) **Procédé de contrôle simultané de l'authenticité d'un support d'information et de la non-falsification de ladite information et dispositifs pour sa mise en oeuvre**
Verfahren zur gleichzeitigen Überprüfung der Echtheit eines Datenträgers und der Nichtfälschung seiner Daten und Vorrichtung zum Durchführen dieses Verfahrens
Method for checking simultaneously the authenticity of a data carrier and the non-falsification of said data, and apparatus for implementing this method

(30) Priorité: 18.06.1987 FR 8708768
(43) Date de publication de la demande: 28.12.1988
(73) Titulaire: Bonnaval-Lamothe, Michel, F-33410 Cadillac sur Garonne (FR)
(72) Inventeur: Bonnaval-Lamothe, Michel, F-33410 Cadillac sur Garonne (FR); Marchand, Renaud, F-33360 Latresne (FR)
(74) Mandataire: Thébault, Jean-Louis

(56) Documents cités:
- EP-A- 0 161 181
- WO-A-81/00776
- FR-A- 2 392 823

## Description

La présente invention a trait à un procédé de contrôle à la fois de l'authenticité d'un support d'informations quelconques et de la non-falsification desdites informations.

Par le brevet US N° 4.423.415 on connaît un procédé d'authentification d'un objet consistant à mesurer en une zone prédéterminée de l'objet certaines caractéristiques physiques spécifiques à l'objet, à coder ces mesures et à reporter ces données codées sur l'objet en vue de la vérification ultérieure de l'authenticité dudit objet.

Dans le susdit brevet, cette vérification s'effectue à l'aide d'un dispositif spécial apte à mesurer, dans ladite zone prédéterminée de l'objet, les mêmes caractéristiques physiques, à coder ces mesures suivant le même algorithme et à comparer les données codées ainsi obtenues avec lesdites données codées reportées sur l'objet.

Les caractéristiques physiques en question sont des caractéristiques susceptibles, bien entendu, d'être à la fois mesurables ou quantifiables tout en étant aléatoires, c'est à dire variables d'un objet à un autre en sorte qu'il soit impossible de rencontrer deux objets strictement identiques en tous points, et non reproductibles.

Ledit brevet US envisage tout particulièrement une application aux documents de papier, les caractéristiques spécifiques à chaque document étant inhérentes à la composition du support et constituées par la transparence à laquelle est éventuellement associée la réflectivité du support.

Ce procédé permet effectivement de vérifier qu'un tel document de papier est bien authentique et n'a pas subi, tout au moins dans la zone de mesure, encore que cette dernière puisse s'étendre à l'ensemble du document, une falsification ou une atteinte quelconque à son intégrité.

Cependant, un tel procédé présente une grave lacune car il ne garantit nullement, dans le cas de son application aux documents de papier, que l'information, quelle qu'elle soit, qu'est destiné à porter un tel document, n'a pas subi, entre le moment de son application sur le document et le moment de la vérification de ce dernier, une quelconque modification ou falsification.

Par les documents FR-A-2.370.328 et WO-A-8100776 on connaît des procédés de contrôle d'authenticité de documents porteurs d'informations qui, contrairement au document US-A-4.423.415, s'attachent, avant la mise en service du document, à paramétrer une partie de l'information portée par le document en vue, lors de contrôles ultérieurs, de comparer ces données paramétrées, stockées en mémoire ou reportées de manière codée sur le document, avec les données paramétrées, effectuées à chaque contrôle et dans les mêmes conditions, de la même partie d'informations.

Ces procédés ne sont pas davantage satisfaisants au plan de la sécurité car ils ne prennent nullement en compte le support des informations et donc son éventuelle falsification ou substitution.

En particulier, le document WO-A-8.100.776, se rapporte à un procédé consistant à caractériser des niveaux de gris, en particulier par rapport au fond, de certains signes d'une information imprimée et à reporter ces données sur le document en une zone déterminée, puis, ultérieurement, dans une phase de contrôle, à réeffectuer cette même caractérisation sur les mêmes signes de l'information et lire les données de ladite zone déterminée à des fins de comparaison.

Toutefois, ce procédé comporte le grave inconvénient qu'un faussaire qui serait en possession d'un support identique à celui du document qu'il veut reproduire, pourrait, par l'analyse, connaître, et donc reproduire, les niveaux de gris des signes imprimés pris en compte. Le report de ces niveaux de gris sur son support lui permettrait alors d'échapper au contrôle.

Enfin, par le document EP-0.161.181 on décrit un procédé d'identification et d'authentification à distance de documents nécessitant une mémorisation d'informations codées en un lieu sûr, à distance et, à chaque contrôle, l'envoi d'informations audit lieu sûr en vue d'un traitement et d'une comparaison dont le résultat est utilisé comme critère d'authentification et renvoyé au lieu de contrôle.

Ce procédé, bien que permettant d'authentifier le support d'informations grâce à une prise en compte de caractéristiques intrinsèques d'au moins une partie dudit support, est particulièrement complexe, lourd et peu pratique du fait des liaisons et des échanges avec un système centralisé à distance. De plus, il n'évite pas davantage que le procédé du document WO-A-8.100.776, qu'un faussaire en possession d'un support identique à celui du document qu'il voudrait reproduire, pourrait reproduire sur ce support les codes et autres distributions spatiales aléatoires imprimés sur le document à reproduire, ce qui lui permettrait d'échapper à tout contrôle.

La présente invention a pour but de pallier ces inconvénients majeurs des procédés connus en proposant un procédé permettant de prendre en compte à la fois l'information et son support par une caractérisation d'éléments inséparablement liés à ladite information et à son support et nés de la rencontre de l'information et du support, cette rencontre étant unique et irreproductible.

A cet effet, l'invention a pour objet un procédé de contrôle simultané de l'authenticité d'un support d'information et de la non-falsification de ladite information, dans lequel on paramètre une partie au moins de l'information et une partie au moins du support et on stocke en mémoire ou reporte sous forme codée sur ledit support les données ainsi paramétrées, puis ultérieurement, à chaque opération de contrôle, on compare lesdites données paramétrées avec les données paramétrées au moment dudit contrôle, dans les mêmes conditions, de la même partie d'information et de la même partie de support, ledit procédé étant caractérisé en ce que ledit paramétrage est effectué par l'analyse, au moyen d'un algorithme de traitement d'image, des particularités inséparablement liées à l'empreinte de l'information sur son support laissée sur ce dernier par le dispositif d'inscription des informations, que ces particularités soient locales, telles que des irrégularités de contour, ou globales et relatives à la totalité de l'empreinte, ladite empreinte étant matérialisée par un signal électrique issu d'un capteur de saisie de l'empreinte.

Un tel procédé s'applique par exemple et entre autres applications aussi bien à des informations imprimées qu'à des informations magnétiques, dans le premier cas le capteur étant une caméra, par exemple du type CCD, cependant que, dans le second cas, le capteur est constitué par une tête de lecture magnétique.

Le procédé de l'invention permet de prendre en compte l'empreinte de l'information sur son support, en ce qu'elle a d'unique et d'irreproductible.

On va décrire maintenant plus en détail le procédé de l'invention à l'aide de plusieurs exemples de mise en oeuvre appliqués à divers types à la fois de support et d'information portée par le support.

A cet effet, on va se reporter aux dessins annexés sur lesquels :
- Figure 1 représente schématiquement un dispositif de lecture dans le cadre de l'application du procédé de l'invention à un support constitué par un document en papier porteur d'une information imprimée ;
- Figure 2 illustre le phénomène de diffusion périphérique de l'encre dans le support d'une lettre imprimée ;
- Figure 3 représente schématiquement une installation de fabrication de chèques munis des informations de contrôle selon l'invention, et,
- Figure 4 illustre l'application du procédé à un support portant des pistes magnétiques.

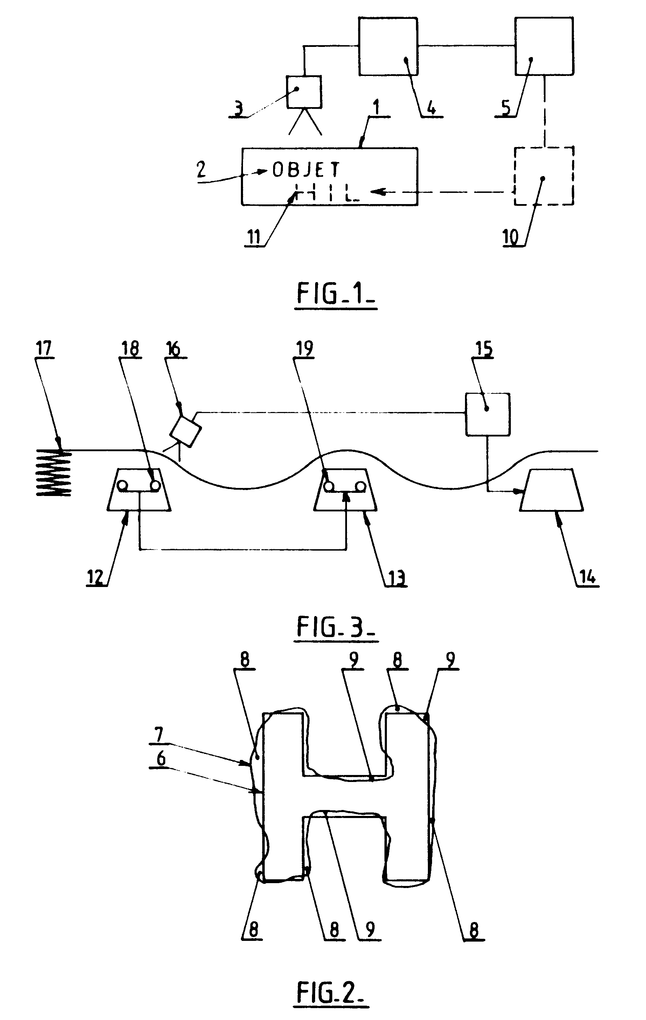

Sur la figure 1 on a représenté en 1 un document en papier porteur d'une information imprimée 2 constituée par le mot OBJET. Le document 1 est lu par une caméra 3, par exemple du type CCD, reliée à un système de numérisation 4 lui-même relié à une unité de calcul 5.

Dans cette application, le procédé de l'invention consiste à prendre en compte l'empreinte des lettres du mot OBJET sur le support par une caractérisation ou mesure des irrégularités de contour des signes imprimés sur le document 1 à l'aide de la caméra 3 dans le champ de laquelle est placé le mot OBJET, du système de numérisation 4 transformant en données binaires les signaux de la caméra et de l'unité de calcul 5.

La figure 2 illustre les irrégularités de contour d'une lettre imprimée sur le support de papier. En 6 sur la figure 2 est représenté le contour idéal de la lettre H et en 7 le contour tel qu'il apparaît en réalité et dont l'irrégularité provient des différences de migration dans le papier des particules d'encre.

Lors de l'examen, particulièrement sous fort grossissement, de signes imprimés à l'encre sur un support de papier, on s'aperçoit que le contour de l'empreinte de l'encre est tout à fait irrégulier et que ces irrégularités ne sont jamais les mêmes pour un même signe imprimé sur le même support avec la même encre et le même système d'impression. Chaque impression d'un signe laisse donc une empreinte ou "signature" spécifique et qui ne peut être reproduite.

Conformément à l'invention on analyse l'empreinte laissée sur le support 1 par la tête d'impression du mot OBJET, et plus particulièrement on analyse les défauts de cette empreinte au moyen d'un algorithme de traitement d'image de type connu.

Parmi les algorithmes susceptibles de convenir, on peut citer, à titre d'exemple et de manière non limitative, ceux utilisés dans la méthode d'analyse des contours, la méthode des histogrammes, la méthode des dérivées, la méthode statistique, la méthode des projections. Toutes ces méthodes sont parfaitement connues des spécialistes de l'analyse d'images et n'ont pas besoin d'être décrites en détail.

Par exemple, dans le cas de l'utilisation de la méthode de l'analyse des contours, à partir de la lecture du mot OBJET fournie par la caméra 3 et numérisée par le système 4, on soustrait, dans l'unité de calcul 5, à l'image numérisée les caractères reconnus dans leur définition parfaite. C'est ainsi que dans le cas de la lettre H de la figure 2 on va soustraire à l'image globale numérisée de la lettre vue par la caméra 3 (contour 7) le contour idéal 6 de la lettre H. Cette opération s'effectue dans l'unité de calcul 5 à l'aide d'un programme approprié dans lequel sont pris en compte les contours idéaux de tous les signes susceptibles d'être rencontrés. Le programme effectue bien entendu la reconnaissance des formes à partir des images numérisées fournies par le système 4 et identifie les caractères lus par la caméra 3. Cette dernière présente bien entendu un nombre suffisant de pixels pour individualiser de manière biunivoque et répétitive chaque signe imprimé.

Par cette soustraction on ne retient plus que les écarts à la normale, dans un sens ou dans l'autre. Dans cette nouvelle image ainsi obtenue on cherche, par exemple les n plus grandes surfaces correspondant auxdits écarts en plus ou en moins. En 8 sur la figure 2 on a représenté plusieurs surfaces distinctes du type positif (parties du signe imprimé débordant du contour idéal) et en 9 des surfaces du type négatif.

On calcule la position de ces n surfaces 8, 9 sélectionnées et ces informations représentent les éléments significatifs caractéristiques des signes lus par la caméra 3 et qu'on appellera par la suite informations de contrôle.

La caméra 3 peut lire un ou plusieurs signes, caractères ou symboles quelconques.

Lesdites informations de contrôle élaborées par l'unité de calcul 5 sont, soit stockées en mémoire dans ladite unité en vue du contrôle ultérieur du document 1 par la même chaîne de lecture, soit envoyées à distance pour être stockées en mémoire dans d'autres chaînes de lecture identiques, soit codées et transcrites en un graphisme quelconque, c'est à dire un ou plusieurs signes, reporté sur le document 1 en un endroit approprié, de préférence dans le champ de la caméra de lecture 3.

La chaîne 3-4-5 sert ainsi à la constitution des informations de contrôle, à la vérification ultérieure du document 1 en repassant ce dernier dans la chaîne de lecture et en comparant lesdites informations de contrôle précédemment stockées à celles élaborées au cours du repassage en seconde lecture et en affichant la concordance ou non des informations comparées.

Dans le cas de l'utilisation de la chaîne de lecture 3-4-5 pour surcoder le document 1, c'est à dire reporter sur lui de manière codée lesdites informations de contrôle qui viennent d'être élaborées, l'unité de calcul 5 est reliée à un système d'impression 10 commandé par ladite unité 5 et chargé d'imprimer sur le document 1, à l'endroit approprié, ledit graphisme symbolisé en 11 sur la figure 1, élaboré par l'unité de calcul à partir desdites informations de contrôle.

La vérification d'un tel document 1 ainsi surcodé s'effectue en passant ce document à nouveau dans la chaîne 3-4-5, ou dans une autre chaîne identique totalement indépendante. Au cours d'un tel passage, la caméra 3 lit à la fois l'information 2 portée par le document 1 et le surcodage 11.

L'unité de calcul 5 élabore à partir de l'information 2 lesdites informations de contrôle, les code, les compare au surcodage 11 et détermine et affiche, par l'intermédiaire d'un organe d'affichage approprié, la concordance ou l'absence de concordance.

Le surcodage du document peut être effectué, soit avant la mise en service du document, soit à tout moment au cours de la vie du document. Le surcodage peut aussi servir à certifier une copie d'un original.

Le système qui vient d'être décrit s'applique tout spécialement aux chèques, mais il peut bien entendu s'appliquer à tous documents en papier ou analogue, notamment des documents officiels d'identité ou autre porteur d'une information, en clair ou codée, imprimée et constituée par des signes quelconques, par exemple ceux d'une police de caractères quelconque.

La figure 3 illustre une telle application de l'invention aux chèques.

Suivant cette application, on intègre à la ligne classique d'impression des chèques constituée d'une imprimante ordinaire 12 suivie d'une imprimante 13 d'impression des caractères CMC7, une troisième imprimante 14, dite de surcodage des chèques, pilotée par un ordinateur 15 couplé à une caméra 16 lisant les chèques immédiatement en aval de la première imprimante 12.

Le processus de fabrication des chèques est le suivant. Le listing vierge 17 des chèques à personnaliser alimente en continu l'imprimante 12 chargée d'imprimer sur chaque chèque, dans la zone réservée aux informations de personnalisation, ces dernières informations, à la manière bien connue, à partir d'une bande magnétique 18 de personnalisation.

Les chèques passent ensuite sur la seconde imprimante 13 d'impression des caractères CMC7 à partir d'une bande magnétique 19, à la manière connue. Ensuite, les chèques passent sur la troisième imprimante 14 chargée d'imprimer un surcodage, par exemple celui représenté en 11 sur la figure 1 ou un graphisme du même genre.

La caméra 16 est analogue à la caméra 3 du système de la figure 1 et lit au moins une partie, prédéterminée, des informations de personnalisation imprimées par la machine 12.

L'image provenant de la caméra est traitée comme dans le système de la figure 1 et est donc numérisée et traitée dans l'ordinateur 15 de façon à obtenir lesdites informations de contrôle et coder ces dernières à l'aide d'un algorithme approprié.

Les informations ainsi codées constituent le surcodage (par exemple 11) qui est imprimé sous la commande de l'ordinateur 15 par l'imprimante 14 dans ladite zone du chèque réservée aux informations de personnalisation, de préférence en un endroit voisin de celui où se trouvent les caractères du chèque pris en compte pour élaborer le surcodage. Ainsi, à chaque vérification ultérieure d'un chèque, à l'aide d'un système tel que la chaîne 3-4-5 de la figure 1, la caméra de contrôle 3 embrassera dans son champ simultanément, d'une part, les mêmes caractères imprimés que ceux ayant été pris en compte à la fabrication du chèque pour le surcodage et, d'autre part, ledit surcodage.

L'ordinateur 15 asservit, bien entendu, la vitesse de l'imprimante 14 à celle des deux autres (12,13) par des systèmes de détection appropriés classiques.

Le système 14-15-16 peut s'intégrer de manière indépendante dans n'importe quelle installation d'impression des chèques et suivant un aspect particulièrement avantageux du procédé de l'invention, implique un coût de fonctionnement négligeable.

Il est à noter que l'imprimante 14 pourrait être constituée par l'imprimante 12 à la condition d'adapter en conséquence la cadence d'impression des chèques.

Le procédé décrit ci-dessus s'applique de manière évidente à un support portant des pistes magnétiques, par exemple des cartes magnétiques.

On observe, en effet, que l'inscription d'une information magnétique sur un support approprié laisse sur ce dernier une empreinte ou signature qui est également unique car elle ne sera pas la même sur un autre support recevant la même information inscrite avec la même tête d'écriture, et irreproductible.

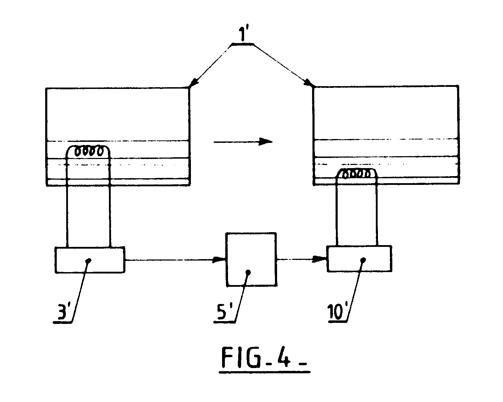

Dans cette autre application (figure 4) on utilise un système tout à fait analogue à celui de la figure 1, dans lequel la caméra 3 est remplacée par une tête de lecture magnétique 3' et l'imprimante 10 par une tête d'écriture magnétique 10'.

La tête de lecture 3' lit tout ou partie des informations magnétiques portées par la ou les pistes du support 1' présenté sous ladite tête. Le signal de lecture est ensuite traité par une unité de calcul 5'. A ce signal l'unité 5' soustrait la courbe considérée comme idéale, préalablement mise en mémoire dans ladite unité et reconnue par elle. L'unité de calcul retient et mesure ensuite les écarts à la normale dans un sens ou dans l'autre, à partir, par exemple, d'une sélection des n plus grandes surfaces et de leur positionnement et génère ainsi lesdites informations de contrôle qui peuvent être utilisées comme indiqué à propos de la figure 1, c'est à dire, soit stockées dans l'unité de calcul 5', soit envoyées à distance à des systèmes de contrôle indépendants, soit codées de façon à générer un surcodage analogue à 11 mais magnétique et reporté par ladite tête d'écriture 10' sur le support 1' sur une seconde piste magnétique.

A la différence du système de la figure 1 toutefois, le support 1' défile devant la tête de lecture magnétique 3' alors que la prise de vue de la caméra 3 est instantanée.

Le surcodage magnétique sera bien entendu reporté sur le support 1' en une zone qui sera balayée par les têtes de lecture des systèmes de contrôle ultérieur du support.

Il est à noter que l'écriture magnétique peut être soit différée soit réalisée au même poste que la lecture magnétique.

Il est à noter que le procédé de l'invention s'applique à tout signe, y compris une image ou une représentation graphique, reporté par impression sur le support.

C'est ainsi que l'information imprimée peut être, par exemple, une photographie, auquel cas celle-ci est prise en compte dans sa globalité à l'aide d'une caméra reliée, via un système de numérisation, à un ordinateur, qui calcule, par exemple, l'histogramme (répartition des niveaux de gris) de la dérivée du signal de variation des niveaux de gris fourni par ladite caméra.

Par ailleurs, l'information peut être matérialisée sur le support par un moyen quelconque, tel qu'une encre, un pigment, une matière ou substance quelconque dans la mesure où la rencontre de cette matière avec le support donne une "signature" unique et irreproductible. L'information peut aussi être présente sur le support sans le concours d'une telle matière, l'information étant incorporée dans le support par enlèvement de matière ou réalisation d'une empreinte en creux.

Enfin, dans la présente description, le terme support ne désigne pas uniquement des documents mais, d'une manière générale, tout support de toute nature susceptible de recevoir une information quelconque appliquée de l'une des manières évoquées ci-dessus.

## Revendications

1. Procédé de contrôle simultané de l'authenticité d'un support d'information (1,1') et de la non-falsification de ladite information (2), dans lequel on paramètre une partie au moins de l'information et une partie au moins du support et on stocke en mémoire ou reporte sous forme codée (11) sur ledit support les données ainsi paramétrées, puis ultérieurement, à chaque opération de contrôle, on compare lesdites données paramétrées avec les données paramétrées au moment dudit contrôle, dans les mêmes conditions, de la même partie d'information et de Pa même partie de support ledit procédé étant caractérisé en ce que ledit paramétrage est effectué par l'analyse, au moyen d'un algorithme de traitement d'image, des particularités inséparablement liées à l'empreinte de l'information sur son support (1,1') laissée sur ce dernier par le dispositif d'inscription des informations (2), que ces particularités soient locales, telles que des irrégularités de contour, ou globales et relatives à la totalité de l'empreinte, ladite empreinte étant matérialisée par un signal électrique issu d'un capteur (3,3') de saisie de l'empreinte.

2. Procédé suivant la revendication 1, caractérisé en ce que l'information est constituée par l'un ou plusieurs des éléments comprenant les lettres d'un alphabet, les chiffres, les signes ou symboles quelconques, les images ou représentations graphiques.

3. Procédé suivant la revendication 1 ou 2, caractérisé en ce que l'information est matérialisée sur le support à l'aide d'une matière ou substance quelconque, en particulier une encre, un pigment, une substance magnétique.

4. Procédé suivant la revendication 1 ou 2, caractérisé en ce que l'information est incorporée dans le support par enlèvement de matière ou empreinte en creux.

5. Dispositif pour la mise en oeuvre du procédé selon l'une des revendications 1 à 3, comprenant un capteur (3, 3') susceptible de prendre en compte tout ou partie d'une information (2) sur un support (1 1') et de matérialiser l'empreinte de ladite information par un signal électrique et des moyens de traitement dudit signal, caractérisé en ce que lesdits moyens de traitement sont des moyens de paramétrage aptes à analyser les particularités inséparablement liées à l'empreinte de l'information laissée sur le support par le dispositif d'inscription, et constitués d'un système de numérisation (4) relié audit capteur (3, 3') et d'un ordinateur (5, 5') relié audit système.

6. Dispositif pour la mise en oeuvre du procédé de l'une des revendications 1 à 3, plus particulièrement destiné au contrôle de documents de papier ou analogue (1) portant une information imprimée (2), caractérisé en ce qu'il comporte es moyens de paramétrage aptes à analyser les particularités inséparablement liées à l'empreinte de l'information sur son support, laissée sur ce dernier par le dispositif d'inscription des informations et constitués d'une caméra (3) reliée par l'intermédiaire d'un système de numérisation (4) à un ordinateur (5) muni d'un organe d'affichage du processus de comparaison.

7. Dispositif suivant la revendication 6, caractérisé en ce qu'il comporte, en outre, une imprimante (10) reliée audit ordinateur (5) et chargée d'imprimer sur ledit document (1) un surcodage (11) constitué par une transcription codée desdites informations de contrôle générée par l'ordinateur.

8. Dispositif suivant la revendication 7, plus particulièrement destiné à être intégré dans une installation de fabrication de chèques du type comprenant une imprimante (12) affectée à l'impression des informations de personnalisation des chèques, caractérisé en ce que la caméra (16) est placée immédiatement en aval de ladite imprimante (12) en regard des zones d'impression desdites informations de personnalisation des chèques et l'imprimante (14) pilotée par l'ordinateur (15) est agencée en aval de la caméra de manière à imprimer lesdits surcodages sur lesdites zones de chèques, les imprimantes (12,14) étant synchronisées de manière à affecter à un chèque considéré le surcodage correspondant à l'information lue sur le chèque par ladite caméra (16).

9. Dispositif pour la mise en oeuvre du procédé de l'une des revendications 1 à 3, plus particulièrement destiné au contrôle de supports (1') partant une information magnétique, comprenant une tête de lecture magnétique (3') reliée à des moyens de traitement, caractérisé en ce que ces derniers sont des moyens de paramétrage aptes à analyser les particularités inséparablement liées à l'empreinte de l'information laissée sur le support par le dispositif d'inscription, et constitués d'un système de numérisation et d'un ordinateur (5') muni d'un organe d'affichage du processus de comparaison.

10. Dispositif suivant la revendication 9, caractérisé en ce qu'il comporte, en outre, une tête d'écriture magnétique (10') reliée audit ordinateur (5') et chargée d'appliquer sur une seconde piste magnétique dudit support (1') un surcodage magnétique généré par ledit ordinateur.

## Claims

1. Method for checking simultaneously the authenticity of an information storage medium (1, 1') and the non-falsification of the said information (2), wherein at least part of the information and at least part of the medium are parameterised and the data thus parameterised are stored in memory or added to the said medium in coded form (11), and then subsequently, at the time of each checking operation, the said parameterised data are compared with the data parameterised at the time of the said check, under the same conditions, of the same part of the information and the same part of the medium, the said method being characterised in that the said parameterising is effected by analysing, by means of an image-processing algorithm, the characteristic features inseparably linked to the impression of the information on its medium (1, 1') left thereon by the device for entering the information (2), whether these characteristic features are local, such as irregularities in outline, or global and relating to all the impression, the said impression being given physical expression by an electrical signal coming from a sensor (3, 3') for capturing the impression.

2. Method according to claim 1, characterised in that the information consists of one or more elements comprising the letters of the alphabet, numerals, signs or symbols of any kind, images or graphical representations.

3. Method according to claim 1 or 2, characterised in that the information is given physical expression on the medium by means of any matter or substance, in particular an ink, pigment or magnetic substance.

4. Method according to Claim 1 or 2, characterised in that the information is incorporated in the medium by the removal of material or recessed impression.

5. Device for implementing the method according to one of Claims 1 to 3, comprising a sensor (3, 3') able to take into account all or some of the information (2) on a medium (1, 1') and giving physical expression to the impression of the said information by means of an electrical signal, and means for processing the said signal, characterised in that the said processing means are means of parameterising suitable for analysing the characteristic features inseparably linked to the information impression left on the support by the entry device, and consisting of a digitising system (4) connected to the said sensor (3, 3') and a computer (5, 5') connected to the said system.

6. Device for implementing the method of one of claims 1 to 3, particularly intended for checking paper documents or similar (1) bearing printed information (2), characterised in that it includes means of parameterising suitable for analysing the characteristic features inseparably linked to the information impression on its medium, left thereon by the information entry device, and consisting of a camera (3) connected by means of a digitising system (4) to a computer (5) provided with a device for displaying the said comparison process.

7. Device according to Claim 6, characterised in that it also includes a printer (10) connected to the said computer (5) and having the purpose of printing, on the said document (1), an overprinted coding (11) consisting of a coded transcription of the said check data generated by the computer.

8. Device according to Claim 7, particularly intended to be integrated in a cheque production installation of the type comprising a printer (12) allocated to the printing of the cheque personalisation information, characterised in that the camera (16) is positioned immediately downstream of the said printer (12) facing the areas where the said personalisation information is printed on the cheques and the printer (14) controlled by the computer (15) is arranged downstream of the camera so as to print the said overprinted codings on the said cheque areas, the printers (12, 14) being synchronised so as to allocate to a cheque in question the overprinted coding corresponding to the information read on the cheque by the said camera (16).

9. Device for implementing the method of one of claims 1 to 3, particularly intended for checking media (1') bearing magnetic data, comprising a magnetic reading head (3') connected to processing means, characterised in that the latter are parameterising means suitable for analysing the characteristic features inseparably linked to the impression of the information left on the medium by the entry device, and consisting of a digitising system and a computer (5') provided with a device for displaying the comparison process.

10. Device according to claim 9, characterised in that it also includes a magnetic writing head (10') connected to the said computer (5') and having the purpose of applying, to a second magnetic track on the said medium (1'), a magnetic overrecorded coding generated by the said computer.

## Patentansprüche

1. Verfahren zur gleichzeitigen Überprüfung der Echtheit eines Informationsträgers (1, 1') und der Nichtfälschung besagter Information (2), bei dem man einen Teil wenigstens der Information und einen Teil wenigstens des Trägers parametrisiert und auf dem besagten Träger die auf diese Weise parametrisierten Daten in kodierter Form (11) in einem Speicher oder einer Liste speichert, dann später bei jedem Überprüfungsvorgang die besagten parametrisierten Daten mit den parametrisierten Daten des gleichen Teils der Information und des gleichen Teils des Trägers im Moment besagter Überprüfung unter den gleichen Bedingungen vergleicht, wobei besagtes Verfahren dadurch gekennzeichnet ist, daß die besagte Parametrisierung mittels eines Bildverarbeitungsalgorythmus durch die Analyse von Besonderheiten vorgenommen wird, die untrennbar mit dem Gepräge der Information auf ihrem Träger (1, 1'), die auf diesem letzteren durch die Vorrichtung zum Einschreiben von Informationen (2) zurückgelassen wurden, verbunden sind, ob diese Besonderheiten nun lokal wie Unregelmäßigkeiten der Kontur oder global und bezogen auf die Gesamtheit des Gepräges sind, wobei besagtes Gepräge durch ein elektrisches Signal materialisiert wird, das von einem Meßfühler (3, 3') zum Erfassen des Gepräges abgegeben wird.

2. Verfahren gemäß Anspruch 1, dadurch gekennzeichnet, daß die Information durch ein oder mehrere Elemente gebildet wird, die die Buchstaben eines Alphabets, Zahlen, irgendwelche Zeichen oder Symbole, Bilder oder graphische Darstellungen umfassen.

3. Verfahren gemäß Anspruch 1 oder 2, dadurch gekennzeichnet, daß die Information auf dem Träger mittels irgendeines Materials oder Substanz, insbesondere einer Tinte, einem Pigment, einer magnetischen Substanz materialisiert ist.

4. Verfahren gemäß Anspruch 1 oder 2, dadurch gekennzeichnet, daß die Information in den Träger durch Materialbeseitigung oder vertieften Abdruck eingearbeitet ist.

5. Vorrichtung zur Durchführung des Verfahrens gemäß einem der Ansprüche 1 bis 3, umfassend einen Meßfühler (3, 3'), der in der Lage ist, die gesamte oder einen Teil der Information (2) auf einem Träger (1, 1') aufzunehmen und das Gepräge besagter Information durch ein elektrisches Signal zu materialisieren, und Mittel zur Verarbeitung besagten Signals, dadurch gekennzeichnet, daß besagte Mittel zur Verarbeitung Mittel zum Parametrisieren sind, die geeignet sind, die untrennbar mit dem Gepräge der auf dem Träger durch die Einschreibvorrichtung zurückgelassenen Information verbundenen Besonderheiten zu analysieren, und von einem Numerisierungssystem (4), das mit besagtem Meßfühler (3, 3') verbunden ist, und einem Datenverarbeiter (5, 5'), der mit besagtem System verbunden ist, gebildet werden.

6. Vorrichtung zur Durchführung des Verfahrens gemäß einem der Ansprüche 1 bis 3, insbesondere bestimmt zur Kontrolle von Dokumenten (1) aus Papier od.dgl., das eine aufgedruckte Information (2) trägt, dadurch gekennzeichnet, daß sie Mittel zum Parametrisieren umfaßt, die geeignet sind, die untrennbar mit dem Gepräge der auf seinem Träger durch die Einschreibvorrichtung zurückgelassenen Information verbundenen Besonderheiten zu analysieren, und durch eine Kamera (3), die unter Zwischenschaltung eines Numerisationssystems (4) mit einem Datenverarbeiter (5) verbunden ist, der mit einem Durchführungsorgan für den Vergleichsvorgang versehen ist, gebildet wird.

7. Vorrichtung gemäß Anspruch 6, dadurch gekennzeichnet, daß sie zudem einen Drucker (10) umfaßt, der mit besagtem Datenverarbeiter (5) verbunden und beaufschlagt ist, um auf besagtes Dokument (1) eine Überkodierung (11) aufzudrucken, die durch eine kodierte Transcription besagter Kontrollinformationen, die von dem Datenverarbeiter erzeugt wurden, gebildet wird.

8. Vorrichtung gemäß Anspruch 7, insbesondere bestimmt zum Integriertwerden in eine Scheckherstellungsanlage eines Typs umfassend einen Drucker (12), der zum Drucken von Informationen zur Personalisierung von Schecks verwendet wird, dadurch gekennzeichnet, daß die Kamera (16) unmittelbar vor besagtem Drucker (12) gegenüber von Aufdruckbereichen besagter Personalisierungsinformationen von Schecks plaziert und der von dem Datenverarbeiter (15) gesteuerte Drucker (14) vor der Kamera derart angeordnet ist, daß besagte Überkodierungen auf besagte Scheckbereiche gedruckt werden, wobei die Drucker (12, 14) derart synchronisiert sind, daß auf einen betrachteten Scheck die Überkodierung entsprechend der auf dem Scheck durch besagte Kamera (16) gelesenen Information aufgebracht wird.

9. Vorrichtung zur Durchführung des Verfahrens nach einem der Ansprüche 1 bis 3, insbesondere bestimmt zur Kontrolle von Trägern (1'), die eine magnetische Information tragen, umfassend einen Magnetlesekopf (3'), der mit Mitteln zum Verarbeiten verbunden ist, dadurch gekennzeichnet, daß diese letzteren Mittel zum Parametrisieren sind, die geeignet sind, um die untrennbar mit dem Gepräge der auf dem Träger durch die Einschreibvorrichtung zurückgelassenen Information verbundenen Besonderheiten zu analysieren, und von einem Numerisationssystem und einem Datenverarbeiter (5), der mit einem Durchführungsorgan für den Vergleichsvorgang versehen ist, gebildet wird.

10. Vorrichtung gemäß Anspruch 9, dadurch gekennzeichnet, daß sie zudem einen Magnetschreibkopf (10') umfaßt, der mit besagtem Datenverarbeiter (5') verbunden und beaufschlagt ist in einen zweiten Magnetstreifen des besagten Trägers (1') eine von besagtem Datenverarbeiter erzeugte magnetische Überkodierung anzubringen.
